# EUROPÄISCHE PATENTSCHRIFT

(11) **EP 2 566 691 B1**
(45) Veröffentlichungstag und Bekanntmachung des Hinweises auf die Patenterteilung: **04.03.2015**
(21) Anmeldenummer: 11720066.7
(22) Anmeldetag: 03.05.2011
(51) Int. Cl.: B32B 25/04, B32B 25/08, B32B 27/34

(54) **VERBUND AUS EINER POLYAMIDFORMMASSE UND VULKANISIERTEM ELASTOMER**
COMPOSITE FORMED FROM A POLYAMIDE MOULDING COMPOSITION AND A VULCANIZED ELASTOMER
COMPOSITE CONSTITUÉ D'UNE COMPOSITION À MOULER À BASE DE POLYAMIDE ET D'ÉLASTOMÈRE VULCANISÉ

(30) Priorität: 04.05.2010 DE 102010028541
(43) Veröffentlichungstag der Anmeldung: 13.03.2013
(73) Patentinhaber: Evonik Degussa GmbH, 45128 Essen (DE)
(72) Erfinder: PAWLIK, Andreas, 45657 Recklinghausen (DE); HÄGER, Harald, 59348 Lüdinghausen (DE)
(86) Internationale Anmeldenummer: PCT/EP2011/057000
(87) Internationale Veröffentlichungsnummer: WO 2011/138300

(56) Entgegenhaltungen:
- EP-A2- 1 065 048
- EP-A2- 1 216 823

## Beschreibung

Die Erfindung betrifft ein Verbundteil, das aus mindestens einem Teilstück aus einer Polyamidformmasse und mindestens einem Teilstück aus einem vulkanisierten Elastomer zusammengesetzt ist. Die einzelnen Teilstücke sind makroskopische Formteile, nicht jedoch z. B. dispergierte Partikel in einem Kunststoff-Elastomer-Blend. Solche Blends sind daher keine Verbundteile im Sinne der Erfindung. Gegenstand der Erfindung ist auch ein Verfahren zur Herstellung derartiger Verbundteile.

Verbundteile aus steifen thermoplastischen sowie gummielastischen Formteilen werden üblicherweise durch Kleben, Verschrauben, mechanisches Verkrallen oder unter Verwendung eines Haftvermittlers zusammengefügt, da bei den weitaus meisten Kombinationen von Thermoplast und Elastomer keine ausreichend feste Haftung erzielt werden kann.

In der EP 0142930 A2 wird ein Weg aufgezeigt, wie Verbunde aus Polyamiden und EPDM-Elastomeren hergestellt werden können. Hierbei wird dem Kautschuk als Vulkanisationsmittel ein Gemisch aus Dicumylperoxid und N,N'-m-Phenylendimaleinimid zugesetzt. Die erhaltenen Haftfestigkeiten sind jedoch für viele technische Anwendungen zu gering.

Die US 5132182 beschreibt, dass Polyamide mit einem Überschuss an Aminoendgruppen eine gute Haftung zu carboxylierten EPDM- oder NBR-Kautschuken aufweisen. In der US 5484848 wird eine andere Lösung dargestellt, die darin besteht, dass das Kautschukcompound ein ungesättigtes Silan enthält. Die erzielten Haftfestigkeitswerte sind in beiden Fällen beachtlich; die Verfahren sind jedoch mit einigen Nachteilen behaftet. So kann bei einer höheren Konzentration von reaktiven Gruppen im Kautschukcompound eine unerwünschte Haftung an der bei der Vulkanisation üblicherweise verwendeten Metallform auftreten.

In der JP 2004035729 A wird die Verwendung von Trimethylolpropantrimethacrylat (TMPTMA) als haftvermittelnde Komponente in aliphatischen Polyamiden für den Verbund mit peroxidisch vernetzbarem EPDM-Kautschuk beschrieben. Nachteilig beim TMPTMA sind dessen Migrationsfähigkeit und dessen wassergefährdender Charakter.

Ausgehend von diesem Stand der Technik stellte sich die Aufgabe, ein Verfahren zur Herstellung eines festen Verbundes aus einem Teil aus einer Polyamidformmasse und einem Teil aus einem vulkanisierten Elastomer zur Verfügung zu stellen, das die genannten Nachteile überwindet. Insbesondere sollten auch übliche Polyamid-Handelstypen eingesetzt werden können, die meistens einen Überschuss an Carboxylendgruppen besitzen.

Überraschend wurde gefunden, dass diese Aufgabe gelöst wird, wenn die Polyamidformmasse hochverzweigte Pfropfcopolymere enthält, die aus einem Polyaminteil und aufgepfropften Polyamidketten bestehen.

Gegenstand der Erfindung ist demzufolge ein Verbundteil, das aus mindestens einem Teilstück aus einer Polyamidformmasse und mindestens einem Teilstück aus einem vulkanisierten Elastomer zusammengesetzt ist, wobei die Polyamidformmasse zu mindestens 40 Gew.-%, bevorzugt zu mindestens 50 Gew.-%, besonders bevorzugt zu mindestens 60 Gew.-% und insbesondere bevorzugt zu mindestens 70 Gew.-% aus der Mischung folgender Komponenten besteht:
a) 60 bis 99 Gew.-Teile, bevorzugt 65 bis 98 Gew.-Teile und besonders bevorzugt 70 bis 97 Gew.-Teile Polyamid sowie
b) 1 bis 40 Gew.-Teile, bevorzugt 2 bis 35 Gew.-Teile und besonders bevorzugt 3 bis 30 Gew.-Teile eines Pfropfcopolymers, das unter Verwendung folgender Monomere hergestellt ist:
   α) 0,5 bis 25 Gew.-%, bevorzugt 1 bis 20 Gew.-% und besonders bevorzugt 2 bis 16 Gew.-%, bezogen auf das Pfropfcopolymer, eines Polyamins mit mindestens 4, bevorzugt mindestens 8 und besonders bevorzugt mindestens 11 Stickstoffatomen sowie
   ß) 75 bis 99,5 Gew.-%, bevorzugt 80 bis 99 Gew.-% und besonders bevorzugt 84 bis 98 Gew.-%, bezogen auf das Pfropfcopolymer, polyamidbildender Monomere, ausgewählt aus Lactamen, ω-Aminocarbonsäuren und/oder äquimolaren Kombinationen von Diamin und Dicarbonsäure,
   wobei die Summe der Gew.-Teile von a) und b) 100 beträgt.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6, PA66, PA610, PA88, PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden.

Das Polyamid kann auch ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA6/PA66, PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer möglichen Ausführungsform wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheramid verwendet.

Anstelle von aliphatischen Polyamiden kann vorteilhafterweise auch ein teilaromatisches Polyamid verwendet werden, dessen Dicarbonsäureanteil zu 5 bis 100 Mol-% von aromatischer Dicarbonsäure mit 8 bis 22 C-Atomen herrührt und das vorzugsweise einen Kristallitschmelzpunkt Tₘ gemäß ISO 11357-3 von mindestens 250 °C, besonders bevorzugt von mindestens 260 °C und insbesondere bevorzugt von mindestens 270 °C besitzt. Derartige Polyamide werden üblicherweise als PPA bezeichnet. Sie sind herstellbar aus einer Kombination von Diamin und Dicarbonsäure, gegebenenfalls unter Zusatz einer ω-Aminocarbonsäure oder dem entsprechenden Lactam. Geeignete Typen sind beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Das teilaromatische Polyamid kann auch als Blend mit einem anderen, beispielsweise aliphatischen Polyamid, eingesetzt werden, beispielsweise mit PA6, PA66, PA11 oder PA12.

Eine andere geeignete Polyamidklasse sind transparente Polyamide; diese sind in den meisten Fällen amorph, können aber auch mikrokristallin sein. Sie können entweder für sich oder in Mischung mit aliphatischen und/oder teilaromatischen Polyamiden wie PA6, PA66, PA11 oder PA12 eingesetzt werden. Zum Erzielen einer guten Haftung kommt es nicht auf das Ausmaß der Transparenz an; entscheidend ist hier, dass der Glasübergangspunkt T_{g}, gemessen gemäß ISO 11357-3, mindestens 110 °C, bevorzugt mindestens 120 °C, besonders bevorzugt mindestens 130 °C und besonders bevorzugt mindestens 140 °C beträgt. Geeignete transparente Polyamide sind beispielsweise:
- Das Polyamid aus 1,12-Dodecandisäure und 4,4'-Diaminodicyclohexylmethan (PA PACM12), insbesondere ausgehend von einem 4,4'-Diaminodicyclohexylmethan mit einem trans,trans-Isomerenanteil von 35 bis 65 %;
- das Polyamid aus Terephthalsäure und/oder Isophthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin, gegebenenfalls in Mischung mit 4.4'-Diaminodicyclohexylmethan,
- das Copolyamid aus Terephthalsäure und/oder Isophthalsäure, 3.3'-Dimethyl-4.4'-diaminodicyclohexylmethan und Laurinlactam oder Caprolactam,
- das (Co)Polyamid aus 1.12-Dodecandisäure oder Sebacinsäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan (bei niedrigem trans,trans-Isomerenanteil),
- das Copolyamid aus Terephthalsäure und/oder Isophthalsäure sowie einem alkylsubstituierten Bis(4-aminocyclohexyl)methan-Homologen, gegebenenfalls in Mischung mit Hexamethylendiamin,
- das Copolyamid aus Bis(4-amino-3-methyl-5-ethyl-cyclohexyl)methan, gegebenenfalls zusammen mit einem weiteren Diamin, sowie Isophthalsäure, gegebenenfalls zusammen mit einer weiteren Dicarbonsäure,
- das Copolyamid aus einer Mischung von m-Xylylendiamin und einem weiteren Diamin, z. B. Hexamethylendiamin, sowie Isophthalsäure, gegebenenfalls zusammen mit einer weiteren Dicarbonsäure wie z. B. Terephthalsäure und/oder 2,6-Naphthalindicarbonsäure,
- das Copolyamid aus einer Mischung von Bis(4-amino-cyclohexyl)methan und Bis-(4-amino-3-methyl-cyclohexyl)methan sowie aliphatischen Dicarbonsäuren mit 8 bis 14 C-Atomen, sowie
- Polyamide oder Copolyamide aus einer Mischung, die 1.14-Tetradecandisäure sowie ein aromatisches, arylaliphatisches oder cycloaliphatisches Diamin enthält.

Diese Beispiele können durch Hinzunahme weiterer Komponenten (z. B. Caprolactam, Laurinlactam oder Diamin/Dicarbonsäure-Kombinationen) oder durch teilweisen oder vollständigen Ersatz von Ausgangskomponenten durch andere Komponenten weitestgehend variiert werden.

Beim Pfropfcopolymer liegt die Aminogruppenkonzentration bevorzugt im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise

   ((H₂N-(CH₂)₃)₂N-(CH₂)₃)₂-N(CH₂)₂-N((CH₂)₂-N((CH₂)₃-NH₂)₂)₂

   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Es ist erwünscht, dass das Pfropfcopolymer einen substantiellen Anteil an Aminogruppen besitzt. Besonders bevorzugt liegt die Aminogruppenkonzentration des Pfropfcopolymers im Bereich von 150 bis 1 500 mmol/kg, insbesondere bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die Herstellung dieser Pfropfcopolymere ist in der EP-A-1 065 048 näher beschrieben.

Polyamidformmassen im Sinne dieser Erfindung sind Aufbereitungen von Polyamiden, die zur Verbesserung der Verarbeitungseigenschaften oder zur Modifizierung der Gebrauchseigenschaften vorgenommen wurden. Sie können beispielsweise folgende Zusätze enthalten:
a) andere Polymere wie etwa Schlagzähmodifikatoren, ABS oder Polyphenylenether. Hierbei ist darauf zu achten, dass keine Phasenumkehr stattfindet, dass also die Matrix der Formmasse aus Polyamid gebildet wird oder dass zumindest ein interpenetierendes Netzwerk vorliegt. Dem Fachmann ist bekannt, dass die Phasenmorphologie in erster Linie von den Volumenanteilen der einzelnen Polymere sowie von den Schmelzeviskositäten abhängt. Wenn das andere Polymere eine deutlich höhere Schmelzeviskosität als das Polyamid besitzt, bildet das Polyamid auch dann die Matrix, wenn es zu weniger als 50 Volumenprozent des Thermoplastanteils, beispielsweise zu etwa 40 Volumenprozent, vorliegt. Dies ist inbesondere bei Blends mit Polyphenylenether relevant;
b) faserförmige Verstärkungsstoffe wie beispielsweise Glasfasern mit rundem oder flachem Querschnitt, Carbonfasern, Aramidfasern, Fasern aus rostfreiem Stahl oder Kaliumtitanatwhisker;
c) Füllstoffe, wie beispielsweise Talkum, Glimmer, Silikat, Quarz, Zirkondioxid, Aluminiumoxid, Eisenoxide, Zinksulfid, Graphit, Molybdändisulfid, Titandioxid, Wollastonit, Kaolin, amorphe Kieselsäuren, Magnesiumcarbonat, Kreide, Kalk, Feldspat, Bariumsulfat, Leitfähigkeitsruß, Graphitfibrillen, Vollglaskugeln, Hohlglaskugeln oder gemahlenes Glas;
d) Weichmacher wie z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure;
e) Pigmente und/oder Farbstoffe wie Ruß, Eisenoxid, Zinksulfid, Ultramarin, Nigrosin, Perlglanzpigmente oder Metallflitter;
f) Flammschutzmittel wie beispielsweise Antimontrioxid, Hexabromcyclododecan, Tetrabrombisphenol, Borate, roter Phosphor, Magnesiumhydroxid, Aluminiumhydroxid, Melamincyanurat und dessen Kondensationsprodukte wie Melam, Melem, Melon, Melaminverbindungen wie Melaminpyro- und -polyphosphat, Ammoniumpolyphosphat sowie phosphororganische Verbindungen bzw. deren Salze wie beispielsweise Resorcinoldiphenylphosphat, Phosphonsäureester oder Metallphosphinate;
g) Verarbeitungshilfsmittel wie beispielsweise Paraffine, Fettalkohole, Fettsäureamide, Paraffinwachse, Montanate oder Polysiloxane sowie
h) Stabilisatoren wie z. B. Kupfersalze, Molybdänsalze, Kupferkomplexe, Phosphite, sterisch gehinderte Phenole, sekundäre Amine, UV-Absorber oder HALS-Stabilisatoren.

Als Elastomer können beispielsweise EPDM, EPM, ACM, Fluorkautschuk, NBR, H-NBR oder AEM einzeln oder in Kombination eingesetzt werden. Die Elastomere werden in Form eines Kautschukcompounds eingesetzt, das beispielsweise Vulkanisationsmittel, Vulkanisationsaktivatoren, Öle und/oder Füllstoffe enthält.

EPDM-Kautschuk wird in bekannter Weise durch Polymerisation eines Gemisches aus Ethen und Propen sowie einem Dien in Gegenwart eines Ziegler-Natta-Katalysators, wie z. B. Diethylaluminiumchlorid, hergestellt. In der Regel wird ein Gemisch aus mehr als 25 % Ethen, mehr als 25 Gew.-% Propen und 1 bis 10 Gew.-%, vorzugsweise 1 bis 3 Gew.-% eines nicht konjugierten Diens wie Bicyclo(2.2.1)-heptadien, 1,5-Hexadien, 1,4-Dicyclopentadien und insbesondere 5-Ethylidennorbornen polymerisiert. EPM-Kautschuk wird entsprechend, aber ohne Dien, hergestellt.

ACM-Kautschuke (Acrylkautschuke) sind Copolymerisate bzw. Terpolymerisate aus Acrylsäureestern (z.B. Ethylacrylat und anderen Acrylaten) und 1-5% reaktiven Comonomeren. Die Herstellung erfolgt durch Emulsions- oder Suspensionspolymerisation. Typische Vernetzungskomponenten sind 2-Chlorethylvinylether, Chlorvinylacetat, N-Methylolacrylamid oder Glycidylmethacrylat. Die Vernetzung kann beispielsweise über Diamine erfolgen.

Geeignete Fluorkautschuke sind beispielsweise in K. Nagdi, Gummi-Werkstoffe, Seite 254 ff., Vogel-Verlag Würzburg 1981 sowie in The Vanderbilt Rubber Handbook, 13th Edition, pp. 211 ff., Vanderbilt Company Inc., Norwalk, Conn. 1990, beschrieben. Beispielhaft genannt seien Vinylidenfluorid/Hexafluorpropen-Copolymere, Vinylidenfluorid/Hexafluorpropen/Tetrafluorethen-Terpolymere oder Vinylidenfluorid/Tetrafluorpropen/Perfluormethylvinylether-Terpolymere.

Geeignete Fluorkautschuke werden beispielsweise von DuPont unter der Bezeichnung Viton, von 3M unter dem Handelsnamen Fluorel, von Montefluos unter der Bezeichnung Tecnoflon und von Daikin Kogyo Co., Japan, unter der Bezeichnung Dai-el hergestellt. Die Wahl der Kautschuktype richtet sich nach den gewünschten Vulkanisateigenschaften.

Die Fluorkautschuk-Compounds können neben dem Kautschuk eine begrenzte Anzahl von Zusatzstoffen enthalten wie beispielsweise Füllstoffe, Farbpigmente, Verarbeitungshilfsmittel, Gleitmittel oder Metalloxide als Säureaufnehmer. Sie enthalten darüber hinaus ein Vulkanisiermittel.

Als Füllstoff können verschiedene Ruße und mineralische Füllstoffe eingesetzt werden. Als Verarbeitungshilfsmittel und Weichmacher kann u. a. flüssiger Fluorkautschuk verwendet werden. Als Gleitmittel sind u. a. Carnauba-Wachs und niedermolekulares Polyethylen geeignet. In der Regel werden allen Fluorkautschuk-Mischungen Metalloxide, wie z. B. Magnesiumoxid, zugesetzt. Diese führen zu einem hohen Vernetzungsgrad und wirken gleichzeitig als Aufnehmer für Fluorwasserstoff, der während der Vulkanisation entsteht.

Für Fluorkautschuk-Mischungen geeignete Vernetzungsmittel basieren u. a. auf Bisphenolen und Phosphoniumverbindungen. Diese sind oftmals bereits im Basispolymer enthalten.

Fluorkautschuk-Typen, die kein Vernetzungsmittel enthalten, werden in der Regel mit Diaminverbindungen, wie z. B. Hexamethylendiamincarbonat, oder mit organischen Peroxiden in Anwesenheit von z. B. Triallylisocyanurat vernetzt.

Hinsichtlich geeigneter Zusatzstoffe und Vernetzungsmittel empfiehlt es sich, den Angaben der Fluorkautschuk-Hersteller, z. B. in den jeweiligen Produktbroschüren, zu folgen. Die Erfindung ist nicht auf bestimmte Vernetzungsmittel beschränkt.

Nitrilkautschuk (NBR) wird durch Copolymerisation von Acrylnitril und Butadien in Masseverhältnissen von ca. 51 : 48 bis 82 : 18 gewonnen. Seine Herstellung erfolgt praktisch ausschließlich in wässriger Emulsion. Die dabei resultierenden Emulsionen werden für den Einsatz im Rahmen dieser Erfindung zum Festkautschuk aufgearbeitet. H-NBR ist hydrierter Nitrilkautschuk.

AEM- (bzw. EACM-) Kautschuke sind Copolymere aus Ethylen, Acrylat (z.B. Methylacrylat) und einem dritten, carboxylhaltigen Monomeren, über das die beispielsweise aminische Vernetzung läuft (US 3883472). Derartige Elastomere, die dem ACM sehr ähnlich sind, sich jedoch durch bessere Festigkeit und Hitzebeständigkeit bei schlechterer Mineralölbeständigkeit auszeichnen, wurden 1975 erstmals von DuPont unter dem Markennamen VAMAC auf den Markt gebracht. Die Vernetzung erfolgt peroxidisch oder aminisch.

Die Kautschuke können in unfunktionalisierter Form vorliegen. In einzelnen Fällen kann die Verbundhaftung weiter verbessert werden, wenn der Kautschuk funktionalisiert wird, beispielsweise durch Einbringen von Carboxyl- oder Säureanhydridgruppen.

Die Verbundteile können einstufig oder zweistufig hergestellt werden.

Beim zweistufigen Prozess wird zunächst das steife Formteil beispielsweise durch Spritzgießen, Extrudieren, Prägen oder Pressen hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Prägen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen.

Geeignete Massetemperaturen der Kautschukmischung im Zylinder liegen im allgemeinen im Bereich von 40 bis 80 °C, vorzugsweise von 60 bis 70 °C. Sie können im Einzelfall jedoch auch höher sein.

Geeignete Werkzeugtemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 15 min; niedrigere Temperaturen und dickere Kautschukteile erfordern längere Zeiten.

Beim Beaufschlagen und Ausvulkanisieren nach dem zweistufigen Extrusionsverfahren wird z. B. ein in der ersten Stufe hergestelltes Profil aus einer Polyamidformmasse, z. B. ein Rohr, mit der Kautschukmasse ummantelt und gegebenenfalls unter Druck ausvulkanisiert. Entsprechend verfährt man mit Platten aus Polyamidformmassen.

Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug bzw. die Kavität für die Kautschukmasse wird auf die vorgegebene Vulkanisiertemperatur aufgeheizt, die unter der Erstarrungstemperatur der Polyamidformmasse liegen sollte.

Anwendungszwecke für die erfindungsgemäßen Bauteile aus den Polyamidformmassen einerseits und den genannten Kautschuk-Compounds andererseits sind z. B. Dichtungen, Gehäuse für Motoren, Pumpen und elektrisch betriebene Werkzeuge, Walzen, Reifen, Kupplungen, Anschlagpuffer, Transportbänder sowie schall- und schwingungsdämpfende Bauteile.

Die Erfindung wird nachfolgend beispielhaft erläutert.

### Herstellung eines geeigneten Pfropfcopolymeren:

4,75 kg Laurinlactam wurden in einem Aufheizkessel bei 180 bis 210 °C aufgeschmolzen und in einen druckfesten Polykondensationskessel überführt. Dann wurden 250 ml Wasser und 57 ppm hypophosphorige Säure zugegeben. Die Laurinlactamspaltung wurde bei 280 °C unter dem sich einstellenden Eigendruck durchgeführt. Anschließend wurde innerhalb von 3 h auf einen Restwasserdampfdruck von 3 bar entspannt und 250 g Polyethylenimin Lupasol G 100, Polyethylenimin der BASF AG, Ludwigshafen) zugegeben. Danach wurde auf Normaldruck entspannt und unter Überleiten von Stickstoff 2 h bei 250 °C polykondensiert. Die klare Schmelze wurde über eine Schmelzepumpe als Strang ausgetragen, im Wasserbad abgekühlt und anschließend granuliert. Eigenschaften des resultierenden Polymers:
Schmelztemperatur Tₘ: 170 °C,
Aminogruppenkonzentration: 879 mmol/kg,
Carboxylendgruppenkonzentration: < 10 mmol/kg.

### Eingesetztes Polyamid (PA): Copolyamid aus 32,5 mol-% Terephthalsäure, 12,5 mol-% Isophthalsäure, 5 mol% Adipinsäure und 50 mol% Hexamethylendiamin.

### Kautschukcompound:

| | |
|---|---|
| BUNA^{®}EP G6170 (EPDM) | 92,50 phr |
| VESTENAMER^{®} 8012 (Polyoctenamer) | 7,50 phr |
| Durex 0 (Ruß) | 100,00 phr |
| Sunpar 150 (paraffinisches Öl) | 30,00 phr |
| ZnO RS (Zinkoxid) | 5,00 phr |
| 3-Methacryloxypropyltrimethoxysilan | 2,00 phr |
| Triallylcyanurat | 1,50 phr |
| Vulkanox HS (Alterungsschutzmittel) | 2,00 phr |
| Perkadox 14/40 (Vulkanisationsmittel) | 7,50 phr |
| Gesamt | 248,00 phr |

### Herstellung und Prüfung von Kunststoff-Kautschuk-Verbunden:

In den Beispielen 1 und 2 wurden das Profcopolymer sowie im Beispiel 2 und im Vergleichsbeispiel 2 die Glasfasern über einen Doppelschneckenkneter in die Schmelze des Polyamids eingearbeitet. Von den Formmassen wurden Platten mit den Abmessungen 100 mm x 100 mm x 4 mm gespritzt. Entsprechende Platten wurden vom Kautschukcompound gepresst.

Platten der Polyamidformmassen wurden anschließend mit Platten des Kautschukcompounds bei einem Stempeldruck von 200 bar für 15 min bei 180 °C mit Hilfe einer Schwabenthan Polystat 200T verpresst. Danach wurde die Verbundhaftung mittels eines Schälversuchs ermittelt. Die Ergebnisse sind in der Tabelle 1 wiedergegeben. Man erkennt, das bei den erfindungsgemäßen Beispielen 1 und 2 die Verbundhaftung wesentlich verbessert ist.

**Tabelle 1: Versuchsergebnisse**

| **Beispiele** | **VB1^{b)}** | **1** | **VB2^{b)}** | **2** |
|---|---|---|---|---|
| PA [Gew.-Tle.] | 100 | 80 | 70 | 55 |
| Pfropfcopolymer [Gew.-Tle.] | - | 20 | - | 15 |
| Glasfaser [Gew.-Tle.]^{a}) | - | - | 30 | 30 |
| Trennwiderstand [N/mm] | 1,5 | 10,5 | 1,5 | 14,4 |

| | | | | |
|---|---|---|---|---|
| ^{a)} ChopVantage HP 3610 (PPG) ^{b)} Vergleichsbeispiele | | | | |

## Patentansprüche

1. Verbundteil, das aus mindestens einem Teilstück aus einer Polyamidformmasse und mindestens einem Teilstück aus einem vulkanisierten Elastomer zusammengesetzt ist, **dadurch gekennzeichnet, dass** die Polyamidformmasse zu mindestens 40 Gew.-% aus der Mischung folgender Komponenten besteht:
a) 60 bis 99 Gew.-Teile Polyamid sowie
b) 1 bis 40 Gew.-Teile eines Pfropfcopolymers, das unter Verwendung folgender Monomere hergestellt ist:
α) 0,5 bis 25 Gew.-%, bezogen auf das Pfropfcopolymer, eines Polyamins mit mindestens 4 Stickstoffatomen sowie
ß) 75 bis 99,5 Gew.-%, bezogen auf das Pfropfcopolymer, polyamidbildender Monomere, ausgewählt aus Lactamen, ω-Aminocarbonsäuren und/oder äquimolaren Kombinationen von Diamin und Dicarbonsäure,
wobei die Summe der Gew.-Teile von a) und b) 100 beträgt.

2. Verbundteil gemäß Anspruch 1, **dadurch gekennzeichnet, dass** die Polyamidformmasse ein aliphatisches Polyamid enthält.

3. Verbundteil gemäß Anspruch 1, **dadurch gekennzeichnet, dass** die Polyamidformmasse ein teilaromatisches Polyamid enthält, dessen Dicarbonsäureanteil zu 5 bis 100 Mol-% von aromatischer Dicarbonsäure mit 8 bis 22 C-Atomen herrührt.

4. Verbundteil gemäß Anspruch 3, **dadurch gekennzeichnet, dass** das teilaromatische Polyamid einen Kristallitschmelzpunkt Tₘ gemäß ISO 11357-3 von mindestens 250°C besitzt.

5. Verbundteil gemäß Anspruch 1, **dadurch gekennzeichnet, dass** die Polyamidformmasse ein transparentes Polyamid enthält.

6. Verbundteil gemäß Anspruch 5, **dadurch gekennzeichnet, dass** der Glasübergangspunkt T_{g} des transparenten Polyamids gemäß ISO 11357-3 mindestens 110°C beträgt.

7. Verbundteil gemäß einem der Ansprüche 1 bis 6, **dadurch gekennzeichnet, dass** das Polyamin ein verzweigtes Polyethylenimin ist, das durch Polymerisation von Aziridinen erhältlich ist.

8. Verbundteil gemäß einem der Ansprüche 1 bis 7, **dadurch gekennzeichnet, dass** das Elastomer ein EPDM, ein EPM, ein ACM, ein Fluorkautschuk, ein NBR, ein H-NBR und/oder ein AEM ist.

9. Verbundteil gemäß einem der vorhergehenden Ansprüche, **dadurch gekennzeichnet, dass** das vulkanisierte Elastomer durch Vulkanisieren eines Kautschukcompounds erhalten wird, das neben dem Elastomer Zusatzstoffe enthält, die ausgewählt sind aus der Gruppe Vulkanisationsmittel, Vulkanisationsaktivatoren, Öle und Füllstoffe.

10. Verfahren zur Herstellung eines Verbundteils gemäß einem der vorhergehenden Ansprüche, **dadurch gekennzeichnet, dass** ein Kautschukcompound im Kontakt mit der Polyamidformmasse vulkanisiert wird.

## Claims

1. A composite part which is composed of at least one subsection made of a polyamide moulding composition and of at least one subsection made of a vulcanized elastomer, **characterized in that** the polyamide moulding composition is composed of at least 40% by weight of the mixture of the following components:
a) from 60 to 99 parts by weight of polyamide and
b) from 1 to 40 parts by weight of a graft copolymer which is produced by using the following monomers:
α) from 0.5 to 25% by weight, based on the graft copolymer, of a polyamine having at least 4 nitrogen atoms and
ß) from 75 to 99.5% by weight, based on the graft copolymer, of polyamide-forming monomers selected from lactams, ω-aminocarboxylic acids and/or equimolar combinations of diamine and dicarboxylic acid,
where the total of the parts by weight of a) and b) is 100.

2. A composite part according to claim 1, **characterized in that** the polyamide moulding composition comprises an aliphatic polyamide.

3. A composite part according to claim 1, **characterized in that** the polyamide moulding composition comprises a semiaromatic polyamide in which from 5 to 100 mol% of the dicarboxylic acid fraction derives from aromatic dicarboxylic acid having from 8 to 22 carbon atoms.

4. A composite part according to claim 3, **characterized in that** the crystallite melting point Tₘ of the semiaromatic polyamide is at least 250°C according to ISO 11357-3.

5. A composite part according to claim 1, **characterized in that** the polyamide moulding composition comprises a transparent polyamide.

6. A composite part according to claim 5, **characterized in that** the glass transition temperature T_{g} of the transparent polyamide is at least 110°C according to ISO 11357-3.

7. A composite part according to any one of claims 1 to 6, **characterized in that** the polyamine is a branched polyethyleneimine which is obtainable through polymerization of aziridines.

8. A composite part according to any one of claims 1 to 7, **characterized in that** the elastomer is an EPDM, an EPM, an ACM, a fluororubber, an NBR, an HNBR and/or an AEM.

9. A composite part according to any one of the preceding claims, **characterized in that** the vulcanized elastomer is obtained through vulcanization of a compounded rubber material which comprises, alongside the elastomer, additives selected from the group of vulcanizing agents, vulcanization activators, oils and fillers.

10. A process for producing a composite part according to any one of the preceding claims, **characterized in that** a compounded rubber material is vulcanized in contact with the polyamide moulding composition.

## Revendications

1. Pièce composite, composée d'au moins une pièce partielle en une masse de moulage en polyamide et d'au moins une pièce partielle en un élastomère vulcanisé, **caractérisée en ce que** la masse de moulage en polyamide est constituée à raison d'au moins 40% en poids du mélange des composants suivants :
a) 60 à 99 parties en poids de polyamide ainsi que
b) 1 à 40 parties en poids d'un copolymère greffé qui est préparé en utilisant les monomères suivants :
α) 0,5 à 25% en poids, par rapport au copolymère greffé, d'une polyamine présentant au moins 4 atomes d'azote ainsi que
ß) 75 à 99,5% en poids, par rapport au copolymère greffé, de monomères formant du polyamide, choisis parmi les lactames, les acides ω-aminocarboxyliques et/ou les combinaisons équimolaires de diamine et d'acide dicarboxylique ;
la somme des parties en poids de a) et b) valant 100.

2. Pièce composite selon la revendication 1, **caractérisée en ce que** la masse de moulage en polyamide contient un polyamide aliphatique.

3. Pièce composite selon la revendication 1, **caractérisée en ce que** la masse de moulage en polyamide contient un polyamide partiellement aromatique, dont la proportion d'acide dicarboxylique provient à raison de 5 à 100% en mole d'acide dicarboxylique aromatique comprenant 8 à 22 atomes de carbone.

4. Pièce composite selon la revendication 3, **caractérisée en ce que** le polyamide partiellement aromatique présente un point de fusion des cristaux Tₘ selon la norme ISO 11357-3 d'au moins 250°C.

5. Pièce composite selon la revendication 1, **caractérisée en ce que** la masse de moulage en polyamide contient un polyamide transparent.

6. Pièce composite selon la revendication 5, **caractérisée en ce que** le point de transition vitreuse T_{g} du polyamide transparent selon la norme ISO 11357-3 est d'au moins 110°C.

7. Pièce composite selon l'une quelconque des revendications 1 à 6, **caractérisée en ce que** la polyamine est une polyéthylène-imine ramifiée qui peut être obtenue par polymérisation d'aziridines.

8. Pièce composite selon l'une quelconque des revendications 1 à 7, **caractérisée en ce que** l'élastomère est un EPDM, un EPM, un ACM, un caoutchouc fluoré, un NBR, un H-NBR et/ou un AEM.

9. Pièce composite selon l'une quelconque des revendications précédentes, **caractérisée en ce que** l'élastomère vulcanisé est obtenu par vulcanisation d'un compound de caoutchouc qui contient, outre l'élastomère, des additifs qui sont choisis dans le groupe des agents de vulcanisation, des activateurs de vulcanisation, des huiles et des charges.

10. Procédé pour la préparation d'une pièce composite selon l'une quelconque des revendications précédentes, **caractérisé en ce qu'**un compound de caoutchouc est vulcanisé en contact avec la masse de moulage en polyamide.
